# EUROPEAN PATENT APPLICATION

(11) **EP 1 082 989 A2**
(43) Date of publication of application: **14.03.2001**
(21) Application number: 00118866.3
(22) Date of filing: 31.08.2000
(51) Int. Cl.: B01D 53/00, B05B 15/12

(54) **Air scrubbing apparatus**

(30) Priority: 07.09.1999 US 390184
(71) Applicant: Honda Canada Inc., Scarborough, Ontario M1B 2KB (CA)
(72) Inventor: Kadymov, Eldar, Barrie, Ontario L4N 6W9 (CA)
(74) Representative: Prechtel, Jörg, Dipl.-Phys. Dr.

(57) **Abstract**

An air scrubbing method and apparatus is described, consisting of multiple purification stages and employing coarse and fine filtration devices and a solvent composition that breaks down paint particles. Paint laden air is mixed with the composition in a turbulent flow, allowed to settle, passed through rotating baffles and filtered.

## Description

### FIELD OF THE INVENTION

The present invention relates to removing particles from suspension in air and, in particular, to an air scrubbing apparatus.

### BACKGROUND OF THE INVENTION

Paint spray booths in vehicle assembly plants often employ both manual and sophisticated robotic spraying techniques to apply paint. Despite these highly automated and controlled processes, a considerable amount of paint may be lost as over-spray, which, unless it is properly contained, may be emitted into the environment of the vehicle assembly plant. Also, the use of paint spray booths, and the problem of over-spray, is not limited to vehicle assembly plants.

To reduce the amount of paint exhausted from paint spray booths, the booths have been designed to exhaust the air after passing it through a wet-scrubber in which the paint-laden air is mixed with a flow of an aqueous scrubbing medium. U.S. Patent No. 4,425,870 issued March 29, 1982 to Marshke discloses just such a paint spray booth. Marshke's spray booth has an upper housing chamber through which articles to be painted are conveyed and a lower housing chamber. Water, as the scrubbing medium, is supplied to a floor that separates the upper and lower housings. Paint laden air is inducted, along with the water, from the upper housing through openings in the floor, through air scrubber units, to the lower housing. The air scrubber units comprise baffles within ducts whose combined effect is to mix the paint-laden air and water, entraining the paint particles in the water. Paint particles collect in the water and the air is exhausted. By angling the air scrubber units, Marshke proposes that the ducts may be lengthened and the mixing of paint-laden air and water may occur for a longer period of time than in conventional vertical scrubbers to thus more effectively remove paint from the air. Clearly, the effectiveness of air scrubbers is related to the mixing and colocating the scrubbers in the paint spray booth places limits on the length of the ducts.

To increase the effectiveness of air scrubbers, chemicals which provide detackifying properties have been added to the water. As well, organic solvents have been used for a scrubbing medium (see, for example, U.S. Patent No. 5,019,138 issued May 28, 1991 to Farrah et al.). Also, use of an oil-in-water emulsion as a scrubbing medium has been shown to contain greater volumes of paint solids than water alone (see U.S. Patent No. 4,919,691 issued April 24, 1990 to Patzelt et al.). However, systems designed to circulate water as the scrubbing medium require adaptation when either organic solvents or oil-in-water emulsion are used.

Waste paint is typically captured in a wet-scrubber and later precipitated as sludge, which must be disposed of by landfill or incineration. Paint sludge represents a large waste source for the user of paint spray booths.

A second problem faced by the user of paint spray booths is related to the efficacy of the air scrubbing. If any paint is allowed to escape, it often affects the immediate environment. For instance, paint particles may settle on cars parked in an employee parking lot.

### SUMMARY OF THE INVENTION

The present invention provides an air scrubbing unit having multiple purification stages employing coarse and fine filtration devices and a composition that breaks down paint particles.

In accordance with an aspect of the present invention there is provided an air scrubbing method including mixing paint laden air with a composition to create mixed air with droplets of a solution of the composition and dissolved paint and scrubbing the mixed air by passing the mixed air through rotating baffles such that at least some of the droplets impact the rotating baffles and are thereby removed from the mixed air. In another aspect of the invention, an air scrubbing apparatus is provided for carrying out this method.

In accordance with a further aspect of the present invention there is provided an air scrubbing method including mixing paint laden air with a composition to create mixed air with droplets of the composition entrained with paint and scrubbing the mixed air by passing the mixed air through rotating baffles such that at least some of the droplets impact the rotating baffles and are thereby removed from the mixed air.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate example embodiments of this invention:
FIG. **1** schematically illustrates an air scrubbing apparatus according to an embodiment of the present invention;
FIG. **2** diagrammatically illustrates an embodiment of the present invention;
FIG. **3** illustrates the embodiment of FIG. 2 in perspective view;
FIG. **4** illustrates the perspective view of FIG. **3** with added transparency;
FIG. **5** diagrammatically illustrates another embodiment of the present invention;
FIG. **6** diagrammatically illustrates a still further embodiment of the present invention.

### DETAILED DESCRIPTION OF THE PREFERRED EMBODIMENTS

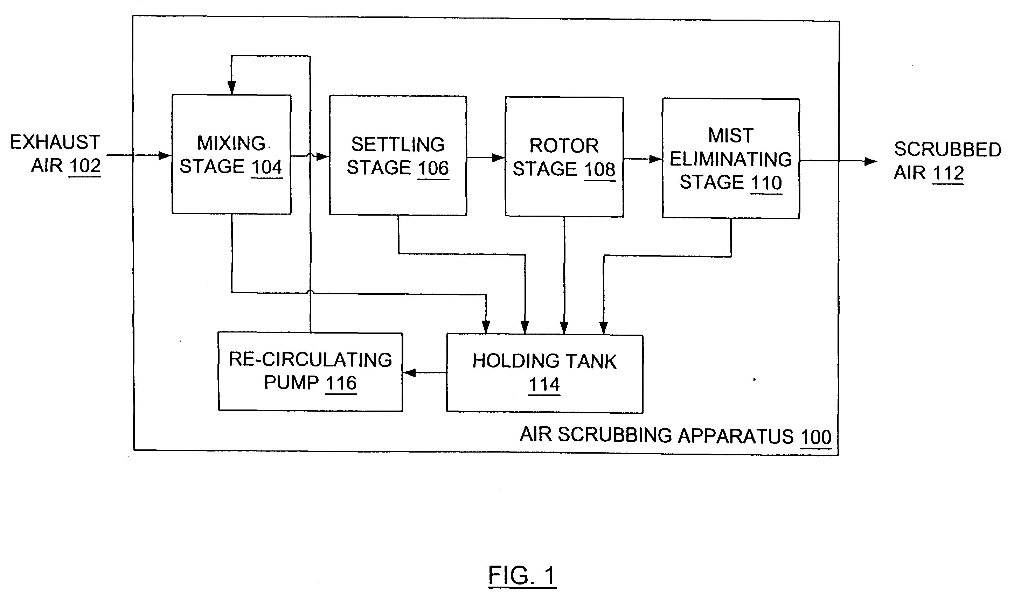

With reference to FIG. **1**, an air scrubbing apparatus **100**, illustrated schematically, includes a mixing stage **104** where paint particle laden exhaust air **102** is mixed with a paint over-spray treatment composition. From mixing stage **104**, air with droplets of a solution of the composition and dissolved paint enters a settling stage **106** where heavier droplets of a mist of the solution are allowed to settle out. The air with lighter droplets of the solution then enter a rotor stage **108**, where some droplets are removed (scrubbed) from the air as they contact blades of a rotor. A flow of scrubbed air **112** is output from a mist eliminating stage **110** where the air is filtered to eliminate the remaining mist. Each of stages **106**, **108** and **110** drain the collected solution into a holding tank **114** from which a re-circulating pump **116** supplies the solution of the composition and dissolved paint to mixing stage **104**. Once the composition is saturated with dissolved paint, the solution may be processed to separate the paint and composition. The composition recycled by this process may be reintroduced to the air scrubbing apparatus.

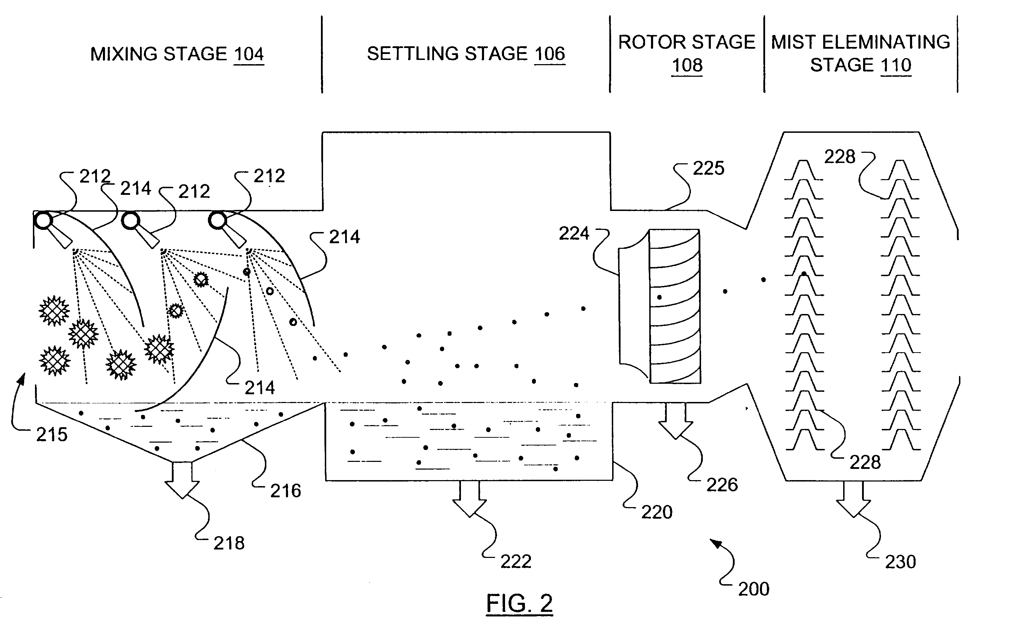

An air scrubbing apparatus **200** illustrated in FIG. **2** includes a mixing stage **104** comprising a series of coarse hydraulic nozzles **212**, a series of shaped baffles **214** and a tray **216** connected to a drain **218**. A settling stage **106** comprises a tray **220** connected to a holding tank (not shown) by a drain **222**. A rotor stage **108** comprises a rotor **224** and a housing **225** connected to the holding tank (not shown) by a drain **226**. A mist eliminating stage **110** comprises a pair of filters **228** and is connected to the holding tank (not shown) by a drain **230**.

In operation, coarse hydraulic nozzles **212**, of mixing stage **104**, create a rain of coarse droplets of paint over-spray treatment composition. Particles of paint, suspended in exhaust air which enters mixing stage **104** at inlet **215**, are dissolved in droplets of the composition and the coarser droplets of the solution of paint and the composition fall to tray **216** from which the solution may pass through drain **218** to the holding tank (not shown). As well as serving to remove paint particles from the exhaust air, droplets of the composition from coarse hydraulic nozzles **212** also serve to wet shaped baffles **214**. Shaped baffles **214** are preferably shaped to cause eddy currents in the paint laden exhaust air as the air passes through mixing stage **104**. For instance, baffles with an involute shape (where the curve of each baffle has an increasing radius along its length) give rise to a variety of eddy currents. The eddy currents promote mixing of the exhaust air and droplets of the composition. Straight baffles would only redirect the air, without promoting desired eddy currents. Settling stage **106** allows the heavier of the remaining droplets of the solution to fall to tray **220** from which the solution may pass through drain **222** to the holding tank (not shown). Rotor stage **108** serves a number of purposes. A preferred rotor **224** is powered and has a number of fan blades rotating on a central shaft. First, rotor **224** acts to impel exhaust air into air scrubbing apparatus **200** and past shaped baffles **214** of mixing stage **104**. Second, droplets are removed from the air as they contact blades of rotor **224**. Droplets removed from the air in this way may fling, due to centrifugal forces, from the rotor blades onto housing **225**. The blades of rotor **224** may also be termed rotating baffles. Once on housing **225**, gravity encourages the accumulated droplets to drain to the holding tank (not shown) via drain **226**. Mist eliminating stage **110** filters the air and solution combination. Two filters **228** may be used, such as Model 125 stainless steel chevron type filters from Munter. As will be appreciated by those skilled in the art, a chevron type filter provides a tortuous path therethrough, such that paint particles hit the chevrons, and drain to drain **230**. Although stainless steel is preferred, some economy may be realized through the use of plastic filters with a similar chevron type cross section.

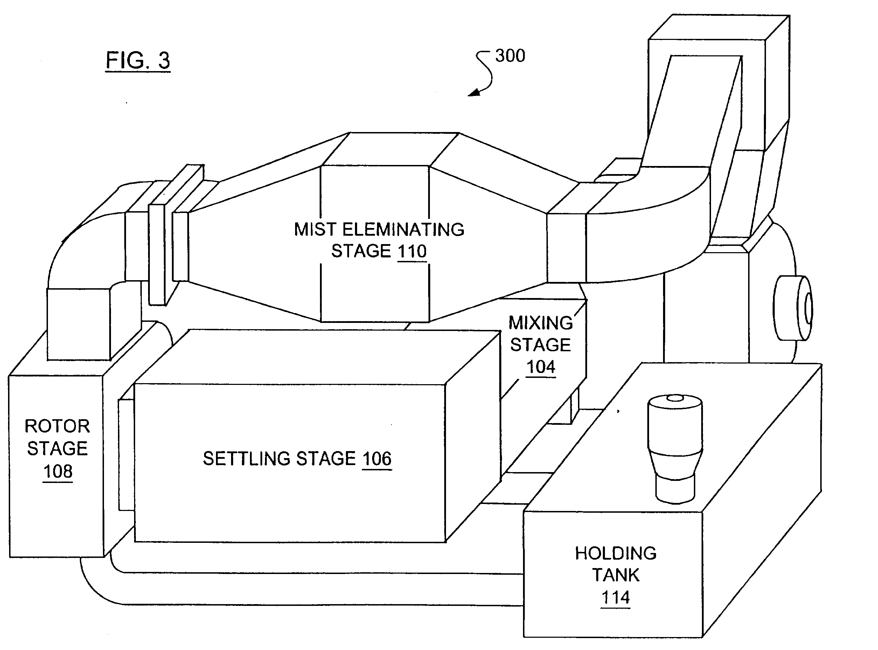

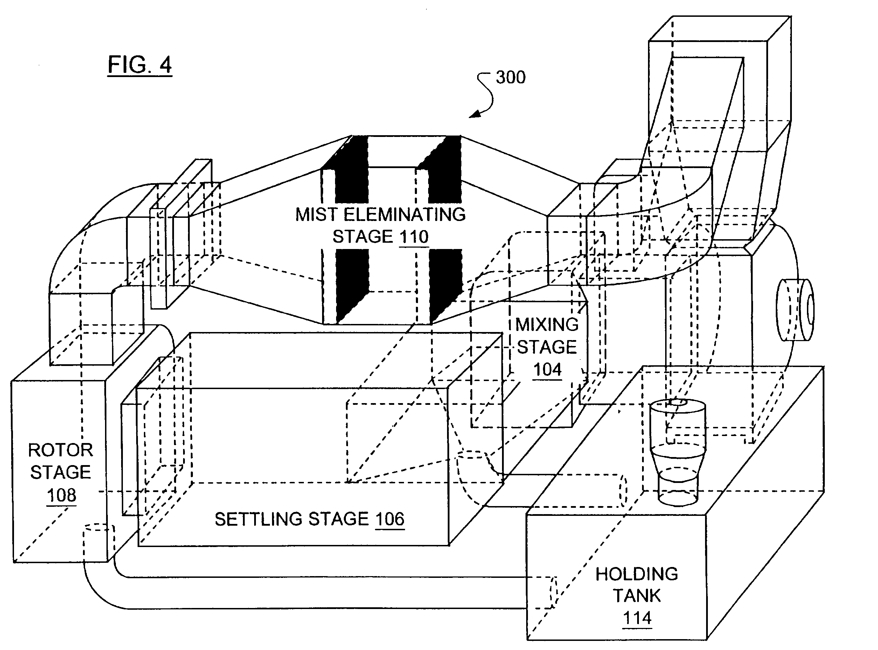

Turning to FIG. **3**, an arrangement **300** of the various stages of an air scrubbing apparatus **200** is shown in perspective view. The placement, relative to each other, of mixing stage **104**, settling stage **106**, rotor stage **108**, mist eliminating stage **110** and holding tank **114** allows for a compact arrangement. Air scrubbing apparatus arrangement **300** is shown in FIG. **4** with added transparency to promote understanding of the structure.

The composition used by air scrubbing apparatus **200** may include a paint solvent. Preferably, the composition dissolves and breaks down the paint to its constituents, namely solids, paste and pigment. EPOC™, by Nortru Incorporated of Detroit, Michigan is such a composition. Furthermore, the constitution of the composition may be altered to suit the type of paint being scrubbed from the air. This composition is continuously re-circulated through holding tank **114** (FIG. **1**). EPOC™ is a patented solvent-in-water emulsion having a unique chemistry which enables it to improve many aspects of the spray booth operation (see U.S. Patent No. 5,200,104, issued April 6, 1993 to Zuerner). After a term of use, EPOC™ may be recycled, eliminating paint sludge disposal problems. More particularly, the spent composition may be reprocessed, which involves recycling the paint solids into useful by-products and the active ingredient into fresh composition.

As will be apparent to those skilled in the art, other suitable solvent-in-water compositions exist. Dürr Environmental of Stuttgart ― Zuffenhausen Germany, produces one such product.

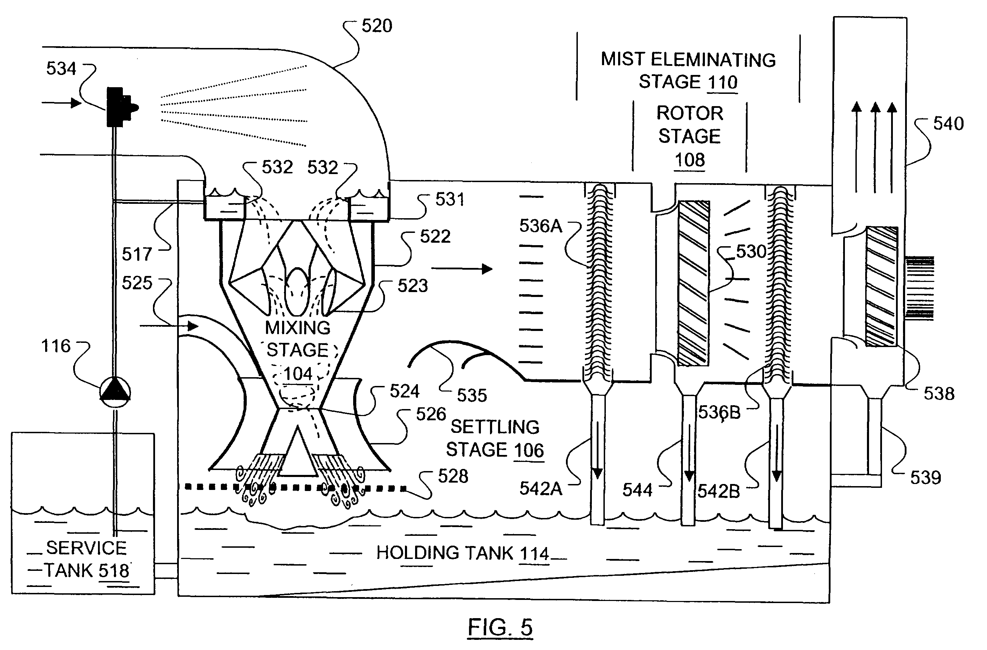

In another embodiment, illustrated in FIG. **5**, an air scrubbing apparatus **500** has the same stages as air scrubbing apparatus **200** (FIG. **2**), namely mixing stage **104**, settling stage **106**, rotor stage **108** and mist eliminating stage **110**, but the stages are implemented differently. Notably, mixing stage **104** includes a Venturi **522** and rotor stage **108** and mist eliminating stage **110** are co-located. Mixing stage **104** is fed by an input duct **520** and includes a weir **532** on the inside of a tray **531** at the mouth of Venturi **522**. Within Venturi **522** are a number of agitators **523** and a constriction **524**. External to Venturi **522** is a sleeve **526**, which is fed by a flow of fresh (not paint laden) air **525**, and a grating **528**. Settling stage **106** includes holding tank **114** and a series of baffle plates **535**. Co-located rotor stage **108** and mist eliminating stage **110** include a pair of filters **536A**. **536B** which drain through a pair of corresponding drains **542A**, **542B** and a rotor **530** which drains through a drain **544**. An exhaust fan **538** propels scrubbed air out an exhaust stack **540** and drains through a drain **539**. The composition circulating system includes a service tank **518** and re-circulating pump **116** that supplies a nozzle **534** and a conduit **517**.

In operation, at the input to mixing stage **104**, input duct **520** supplies air scrubbing apparatus **500** with paint laden air from the exhaust of a paint spray booth (not shown). Pump **116** supplies conduit **517** which over-fills tray **531**. Paint laden air and the composition (flowing over weir **532**) enter Venturi **522** via agitators **523** which introduce a swirling effect to the flow of the composition. Constriction **524** of Venturi **522** increases the velocity of the composition. The combined effect of constriction **524** and agitators **523** is to encourage mixing of the paint laden air and the composition. At an output end of Venturi **522**, sleeve **526**, which is fed by a flow of fresh (not paint laden) air **525**, and grating **528** serve, in combination, to further agitate and therefore mix the paint laden air and the composition.

The output of mixing stage **104** is then introduced to settling stage **106** through which air, now including a mist of a solution of the composition and paint, flows to the remaining stages. The heavier droplets of the mist are allowed to fall to holding tank **114** while many lighter droplets, still suspended in the air, may impact upon baffle plates **535** and, when enough solution has collected on baffle plates **535**, the collected solution may drop to holding tank **114**.

In contrast to air scrubbing apparatus **200** (FIG. **2**), rotor stage **108** and mist eliminating stage **110** are co-located in air scrubbing apparatus **500**. Through the impelling action of exhaust fan **538**, the solution and air combination is drawn through a pair of filters **536** that comprise mist eliminating stage **110**. Comprising rotor stage **108**, and interposed between filters **536**, is a rotor **530** that, in contrast to rotor **224** (FIG. **2**), serves only the single purpose of acting as a scrubber. A preferred rotor **530** is not powered and has a number of fan blades free to rotate on a central shaft. Droplets of solution may collect on the blades of rotor **530** and thus be removed (scrubbed) from the air flow. Rotor **530** does not impel or propel the air. The movement of mist and air is encouraged throughout air scrubbing apparatus **500** by exhaust fan **538** which propels scrubbed air out exhaust stack **540**. This air movement forces blades of rotor **530** to rotate, thus improving the scrubbing action of the rotor stage **508** and promoting the fling of collected solution and eventual draining through drain **544**. Note that, if any mist remains in the air flow after mist eliminating stage **510**, it may be scrubbed by exhaust fan **538**. Any solution scrubbed by exhaust fan **538** my return to holding tank **114** through drain **539**.

The re-circulation of the composition begins at holding tank **114** from which the composition is passed to service tank **518** whence it is drawn to supply conduit **517** to tray **531** and nozzle **534**. A spray of the composition from nozzle **534** is used to discourage a build-up of paint solids within input duct **520**. Any build-up is pushed along duct **520** into tray **531**.

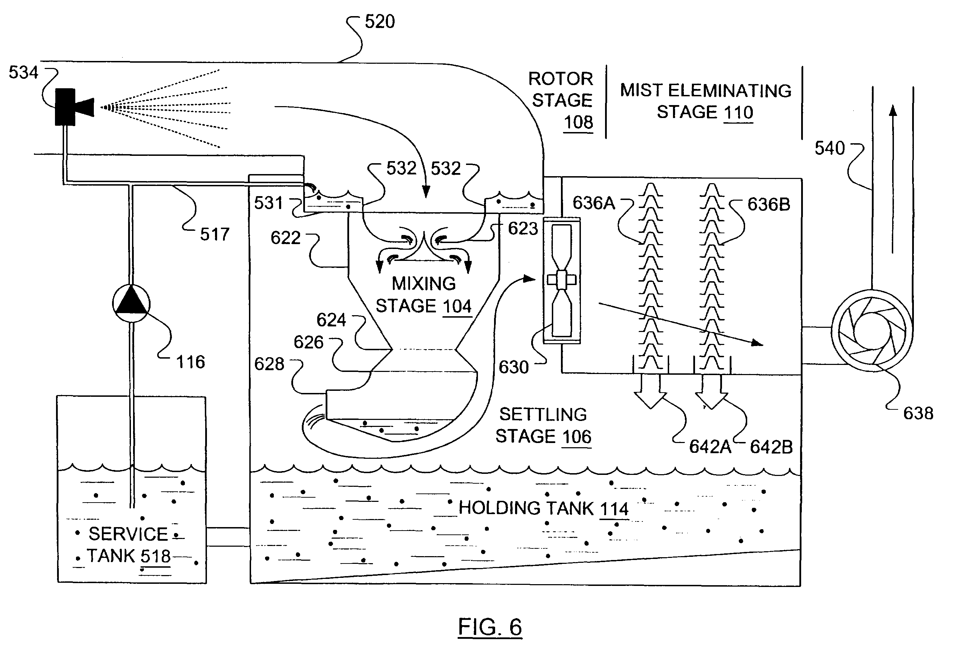

In a further embodiment, illustrated in FIG. **6**, an air scrubbing apparatus **600** takes on a similar formation to air scrubbing apparatus **500** (FIG. **5**) with mixing stage **104**, settling stage **106**, rotor stage **108** and mist eliminating stage **110**. Parts of air scrubbing apparatus **600** in common with air scrubbing apparatus **600** are labelled with common reference numerals. Mixing stage **104** is fed by input duct **520** and includes weir **532** on the inside of tray **531** at the mouth of a Venturi **622**. Within Venturi **622** are a number of agitators **623** and a constriction **624**. At an output opening **626** of Venturi **622** is a flow director **628**. Settling stage **106** includes holding tank **114**. Rotor stage **108** includes a rotor **630** while mist eliminating stage **110** includes a pair of filters **636A**, **636B** which drain through a pair of corresponding drains **642A**, **642B**. An exhaust fan **638** propels scrubbed air out an exhaust stack **540**.

Air scrubbing apparatus **600** is distinct from air scrubbing apparatus **500** in that agitators **623** serve to mix paint laden air and the composition in a manner different from agitators **523** (FIG. **5**). While both agitators **523**, **623** introduce a turbulent flow of the composition through which paint laden air is passed, agitators **523** introduce a swirl in the flow of composition, whereas agitators **623** introduce a more random splashing effect. As well, rotor **630** precedes filters **636**, rather than being interposed between them, as is the case in air scrubbing apparatus **500** (FIG. **5**). In most other respects, the apparatus **500** and **600** are alike. Thus, the air scrubbing apparatus **600** uses a freely rotating rotor **630**, similarly to rotor **530** (FIG. **5**), as a scrubber.

As will be apparent to a person skilled in the art, a scrubbing medium other than a solvent-in-water composition may be employed. With reference to FIG. **1**, paint particle laden exhaust air **102** is mixed with a scrubbing medium in mixing stage **104**. From mixing stage **104**, air with droplets of the scrubbing medium entrained with paint enters a settling stage **106** where heavier droplets of a mist of the scrubbing medium entrained with paint are allowed to settle out. The air with lighter droplets of the scrubbing medium entrained with paint then enter a rotor stage **108**, where some droplets are removed (scrubbed) from the air as they contact blades of a rotor. A flow of scrubbed air **112** is output from a mist eliminating stage **110** where the air is filtered to eliminate the remaining mist. Each of stages **106**, **108** and **110** drain the collected scrubbing medium entrained with paint into a holding tank **114** from which a re-circulating pump **116** supplies scrubbing medium to mixing stage **104**. It will be appreciated that the present invention using scrubbing media such as water, organic solvents or oil-in-water emulsions will be less efficient at scrubbing paint laden air, and thus less desired, than the present invention using the preferred solvent-in-water composition.

Other modifications will be apparent to those skilled in the art and, therefore, the invention is defined in the claims.

An air scrubbing method and apparatus is described, consisting of multiple purification stages and employing coarse and fine filtration devices and a solvent composition that breaks down paint particles. Paint laden air is mixed with the composition in a turbulent flow, allowed to settle, passed through rotating baffles and filtered.

## Claims

1. An air scrubbing method comprising:
mixing paint laden air with a solvent composition to create mixed air with droplets of a solution of said composition and dissolved paint; and
scrubbing said mixed air by passing said mixed air through rotating baffles such that at least some of said droplets impact said rotating baffles and are thereby removed from said mixed air.

2. The method of claim 1 further comprising, after said mixing, allowing some of said droplets of said solution to settle out of said mixed air.

3. The method of claim 1 further comprising filtering said mixed air.

4. The method of claim 3 wherein said filtering employs a chevron type filter.

5. The method of claim 1 wherein said mixing comprises passing said paint laden air through a rain of said composition in a mixing zone.

6. The method of claim 5 wherein said mixing further comprises introducing eddy currents in said paint laden air.

7. The method of claim 1 wherein said mixing comprises passing said paint laden air and said composition through a Venturi.

8. The method of claim 7 wherein said mixing comprises flowing said composition into said Venturi.

9. The method of claim 1 wherein said rotating baffles are rotated with sufficient speed to fling at least some of any said solution on said rotating baffles tangentially to a path of said mixed air.

10. An air scrubbing apparatus comprising:
a mixer for mixing paint laden air with a solvent composition to create mixed air with droplets of a solution of said composition and dissolved paint; and
rotatable baffles for scrubbing said mixed air by passing said mixed air through said baffles, while rotating, such that at least some of said droplets impact said rotating baffles and are thereby removed from said mixed air.

11. The apparatus of claim 10 further comprising a filter for filtering said mixed air.

12. The apparatus of claim 10 further comprising a holding tank for storing said solution of said composition and dissolved paint.

13. The apparatus of claim 12 further comprising a pump for re-circulating said composition from said holding tank to said mixer.

14. The apparatus of claim 10 wherein said mixer comprises spray nozzles for spraying said composition arid baffles configured to introduce eddy currents in said paint laden air.

15. The apparatus of claim 14 wherein said baffles have an involute configuration.

16. An air scrubbing apparatus comprising:
means for mixing paint laden air with a solvent composition to create mixed air with droplets of a solution of said composition and dissolved paint;
rotating baffle means for scrubbing said mixed air by passing said mixed air through said rotating baffle means such that at least some of said droplets impact said rotating baffle means and are thereby removed from said mixed air.

17. An air scrubbing method comprising:
mixing paint laden air with a composition to create mixed air with droplets of said composition entrained with paint; and
scrubbing said mixed air by passing said mixed air through rotating baffles such that at least some of said droplets impact said rotating baffles and are thereby removed from said mixed air.
